(19) Europäisches Patentamt
European Patent Office
Office européen des brevets

(11) **EP 2 583 955 A1**

(12) **EUROPEAN PATENT APPLICATION**
published in accordance with Art. 153(4) EPC

(43) Date of publication:
**24.04.2013 Bulletin 2013/17**

(51) Int Cl.:
*C05C 9/00* (2006.01)          *B05D 1/02* (2006.01)
*B05D 7/00* (2006.01)

(21) Application number: **11796033.6**

(22) Date of filing: **31.05.2011**

(86) International application number:
**PCT/RU2011/000374**

(87) International publication number:
**WO 2011/159199 (22.12.2011 Gazette 2011/51)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.06.2010 RU 2010124709**

(71) Applicant: **Otkrytoe Aktsionernoe Obschestvo
Research
& Design Institute Of Urea And Organic Synthesis
Products (OAO NIIK)
Nizhny Novgorod Region 606008 (RU)**

(72) Inventors:
• **SOLDATOV, Aleksei Vladimirovich
Dzerzhinsk
Nizhny Novgorod obl. 606025 (RU)**
• **SERGEEV, Yury Andreevich
Dzerzhinsk
Nizhny Novgorod obl. 606037 (RU)**
• **CHEBLAKOV, Nikolai Valentinovich
Dzerzhinsk
Nizhny Novgorod obl. 606008 (RU)**

• **ANTIPOV, Stanislav Aleksandrovich
Dzerzhinsk
Nizhny Novgorod obl. 606031 (RU)**
• **ERMOLAEV, Dmitry Alekseevich
Dzerzhinsk
Nizhegorodskoy obl. 606025 (RU)**
• **KOTOVA, Natalya Nikolaevna
Dzerzhinsk
Nizhny Novgorod obl. 606010 (RU)**
• **PROKOPYEV, Aleksandr Alekseevich
Dzerzhinsk
Nizhny Novgorod obl. 606008 (RU)**
• **KOSTIN, Oleg Nikolaevich
Nizhny Novgorod 603010 (RU)**
• **KUZNETSOV, Nikolai Mikhailovich
Dzerzhinsk
Nizhny Novgorod obl. 606000 (RU)**
• **ESIN, Igor Veniaminovich
Dzerzhinsk
Nizhny Novgorod obl. 606000 (RU)**

(74) Representative: **Vossius & Partner
Siebertstrasse 4
81675 München (DE)**

(54) **METHOD FOR PRODUCING GRANULATED CARBAMIDE**

(57)     The invention relates to methods for producing urea-based fertilizers on the basis of urea and, more specifically, to methods for producing fertilizers containing urea and elemental sulfur. Sulfur-coated granulated urea is produced by introducing urea granules at a temperature of 20-60°C into a drum which has blades mounted on the inside surface thereof and rotates at a speed equal to 81-99 % of the critical speed of rotation of the drum, and by spraying a sulfur melt onto the surface of the urea granules. The melt is sprayed in the direction of the axis of rotation of the drum. The method provides for the even coating of the granules with sulfur.

Fig. 2

**EP 2 583 955 A1**

## Description

Field of the Invention

The invention relates to methods of production of fertilizers on the basis of urea, namely to methods of production of fertilizers containing urea and elemental sulfur.

Background of the Invention

Among the fertilizers containing urea and elemental sulfur, the following ones are of special interest: fertilizers containing sulfur in the form of urea granules surface coating because such a structure of fertilizer particles provides low caking of granules, slow dissolution of urea in soil and accordingly reduction of its losses by means of washing away from soil.

Known is the method of production of granulated urea coated with sulfur by processing of urea granules with heated air containing vapors of sulfur, as a result of which sulfur is desublimated at the granules surface (SU 1093690, C05C 1/02, 1984). The method is characterized by high power consumption connected with necessity of sulfur evaporation and transportation of great volumes of the gas which is the carrier of sulfur vapors.

Known is the method of production of granulated urea coated with sulfur by mixing of granules of urea with sulfur containing 5-20 % of moisture which is produced as a result of its wet ground (US 2004/0163434, C05C 9/00, 2001). The method is characterized by high power consumption and complicated equipment for process of preliminary preparation of sulfur.

The closest to the proposed method is the known method of production of granulated urea coated with sulfur including introduction of urea granules into a hollow rotating drum with simultaneous spraying of sulfur melt onto urea granules surface inside the rotating drum (US 3903333, B05D 7/00, C05C 9/00, 1975). According to this method, urea granules are introduced into the drum after preliminary heating up to 77-95°C; the drum rotation speed is 30-80% of so-called critical speed; sulfur melt is sprayed into the direction which is perpendicular to the rotation axis of the drum.

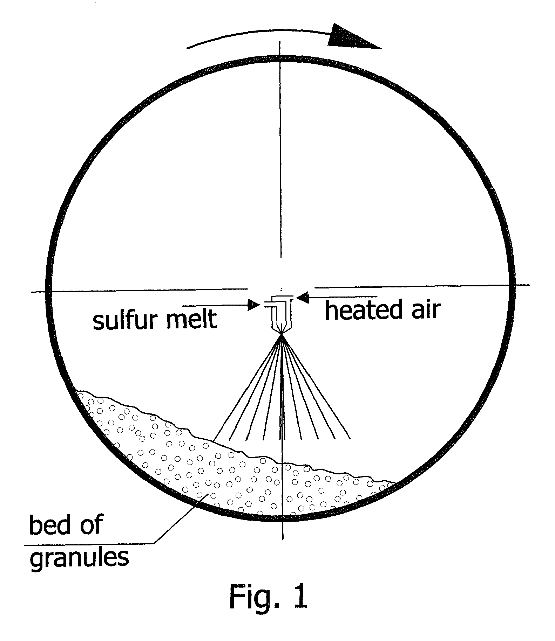

In this method the character of granules movement while coating of the surface with sulfur melt is determined by the above-mentioned range of ratio of the drum rotation speed to the critical speed of rotation. In the absence of the drum rotation, the granules remain as a fixed bed at the bottom of the drum. While the drum rotating, this bed is displaced into the direction of its rotation, and a mixing of granules takes place in the bed by means of simultaneous action of centrifugal force and gravity as it is shown in the attached fig. 1 taken from description of the known method. As the rotation speed grows, the intensity of mixing also increases. The drum rotation speed at which granules by means of centrifugal force are distributed by a uniform layer of ring section along the entire drum surface is called critical speed of rotation. According to laws of elementary mechanics, this speed depends on diameter of the drum and bulk density of the granulated product. The value of this speed ($\omega_{\text{кр}}$) for urea is expressed by the simple equation:

$$\omega_{\text{кр}} = 42{,}3 \, / \, D^{1/2},$$

where D is inner diameter of the drum, m.

In the range of drum rotation speed used in the known method (30-80 % of the critical speed), the granules movement in the drum cross-section is shown in fig. 1. Such character of the granules movement in a combination with the above mentioned direction of sulfur melt spraying does not provide enough uniform coating of granules with sulfur; that is why a preliminary considerable heating of urea granules up to 77-95°C is applied in the known method using an additional drum; that leads to improvement of coating uniformity.

Summary of the Invention

The technical problem to solution of which the present invention is directed consists in simplification of technology of production of the granulated urea with a uniform sulfur coating.

To solve this problem, the method of production of granulated urea coated with sulfur is proposed, including introduction of urea granules into rotating drum with a simultaneous spraying of sulfur melt onto the urea granules surface in the rotating drum characterized in that urea granules with a temperature of 20-60°C are introduced into the drum with blades installed on its internal surface, rotation speed of the drum being 81-99 % of the critical rotation speed, and sulfur melt is sprayed in the direction of the drum rotation axis.

The technical result obtained using the invention consists in ensuring uniformity of urea granules sulfur coating without their preliminary heating. The proposed method allows varying in a wide range the coating layer thickness (for example, 0.01-0.04 mm) and accordingly the sulfur content in the product (for example, 4-15 % wt.). In all the cases the granules coating uniformity is achieved, so cracks are not found out even at microscopic survey.

This result is caused by the fact that at use of the drum with internal blades in a range of its rotation speed close to the critical speed, there is another character of the granules movement than the same in the known method, there is not only the granules mixing, but also lifting of the granules by the blades and their subsequent falling down from the blades onto the drum bottom by parabolic trajectories. The granules go from the drum bottom again in the direction of its rotation so a constantly regenerated curtain of granules is formed in the drum. It was found that sulfur melt spraying in the direction of the drum axis, i.e., perpendicular to the plane of granules movement vectors in the formed curtain, provides uniform coating of sulfur melt layer onto the surface of the granules having a temperature of 20-60°C which is lower than in the prototype. It provides the possibility to process the granules having ambient temperature, or the granules leaving the prilling tower with a temperature 30-60°C. Thus, it excludes the necessity of preliminary heating of granules, so the processing of granules is simplified.

Brief Description of Drawings

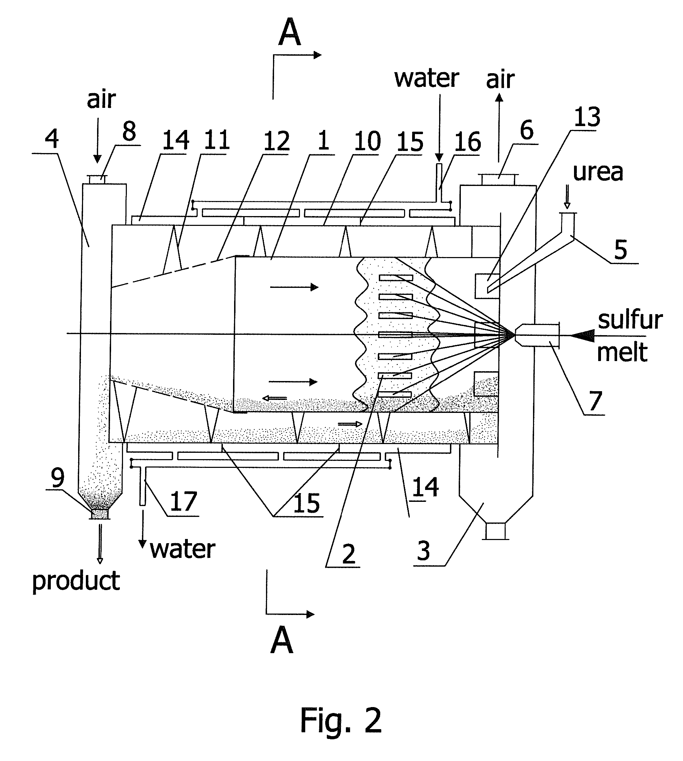

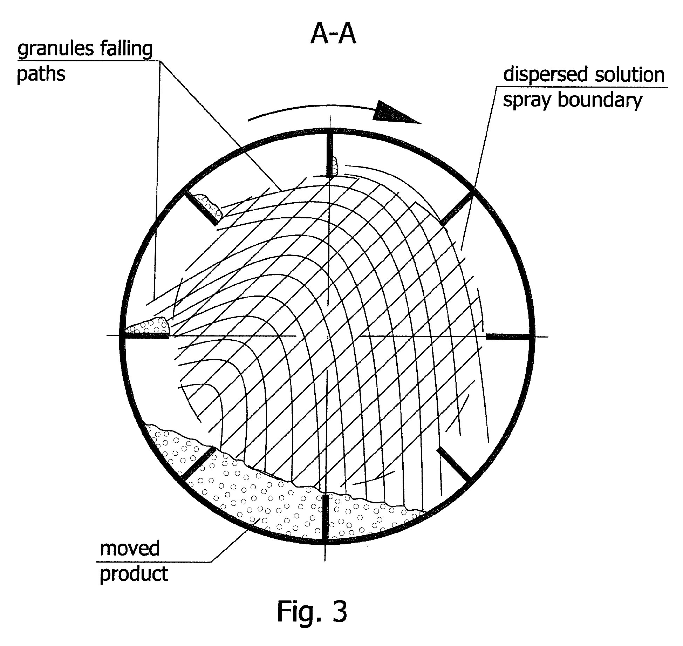

Fig. 1 schematically illustrates a character of granules movement in cross-section of the known drum. The essence of the invention is illustrated with Fig. 2 and Fig. 3. Fig. 2 illustrates the drum in a longitudinal section which can be used for realization of the proposed method (the drum structure is described in RU 2328338). Fig. 3 schematically illustrates the character of granules movement as per the proposed method in the drum cross-section A-A.

Description of the Preferred Embodiments

Drum 1 showed on Fig. 2 contains transporting attachment in the form of distributive blades 2 installed on the internal surface in some lines; loading chamber 3 and discharge chamber 4 being fixed to the rotating drum. The loading chamber contains a loading pipe 5, air output nipple 6 and mechanical nozzle 7 located along the axis of the drum. The discharge chamber contains the air input nipple 8 and final product output nipple 9. The unit is also equipped with additional external drum 10, reverse screw 11 located between the drums and rotating together with them, the internal drum containing the sizing screen 12 fixed to the both drums, and inlet openings 13. Casing 14 with baffles 15 and nipples 16 and 17 for chilling water supply and drain is arranged outside of the external drum 10 so that to provide chilling by water of the drum wall and, hence, of the product returned as a recycle into the area of the falling down granules curtain.

The offered method is realized in the drum illustrated in Fig. 2 as follows. Prilled urea is fed through pipe 5 fixed in stationary loading chamber 3, and comes into drum 1 equipped with transporting attachment 2. At rotation of the drum, the blades of attachment 2 lift and throw out the product in a parabolic trajectory in the drum cross-section, thus forming a dense and uniform curtain of falling particles of the product (Fig. 3). At the same time, sulfur melt is being sprayed by means of nozzle 7 into the front part of the drum 1 onto the curtain formed by falling particles. During the particles movement in the drum cross-section and along its axis takes place the melt lay-up onto the granules which move to the opposite end of the drum 1, from whence they come into discharge chamber 4 and leave the unit through nipple 9. At the same time, chilling air is fed through nipple 8 which passes through the drum 1 countercurrent to the direction of the hot product movement and moves further through loading chamber 3 and nipple 6 to the cleaning system. Granules after moving to the opposite end of drum 1 come into sizing screen 12. Having reached the sizing screen end, the granules of the standard size go to discharging chamber 4 and leave the unit through nipple 9 as the final product. Undersized product is spilled through the sizing screen 12 into the space between internal drum 1 and external drum 10 and transported by means of the screw 11 into the front part of external drum 10 to openings 13 through which the product comes into internal drum 1 for the further coating in the falling curtain., Cooling water with a temperature of 22-28° is fed into nipple 16 of casing 14 for removal of generated heat.

Essence of the invention is also illustrated by the below given Examples describing particular implementations of the proposed method of granulated urea production.

Example 1. Prilled urea from prilling tower with average size of granules ~2.0 mm at the temperature of 60°C in amount of 8.5 t/h is fed to drum granulator (inner diameter 1600 mm) through loading pipe 5. The drum rotation speed is 27 rpm (~81 % of the critical speed). Simultaneously with supply of the prilled urea, sulfur melt with the temperature of 127°C is fed through nozzle 7 by means of the pump in amount of 0.4 t/h. The sulfur melt is sprayed by nozzle 7 onto the curtain formed by urea granules. Spray is formed so that all the curtain of falling granules is to be uniformly coated. During the particles movement in the granulator cross-section and along its axis, lay-up of sulfur melt on the prills takes place. The produced urea coated with sulfur goes to the other end of the drum and is unloaded from the unit in amount of 8.9 t/h with the temperature of 62°C. The thickness of sulfur coating is 0.01 mm, and the sulfur content in the final product is 4.0 %.

Example 2. Process is carried out in a similar way as in the Example 1 with the only difference that the prilled urea is fed from a storage with the temperature of 20°C in amount of 8.9 t/h, speed of rotation of the drum is 30.5 rpm (~92 % of the critical speed), sulfur melt with the temperature of 123°C is fed in amount of 1.2 t/h, the produced urea coated with sulfur is discharged outside from the unit in amount of 10.1 t/h with the temperature of 30°C. Sulfur coating thickness is 0.03 mm, and the sulfur content in the final product is 12.3 %.

Example 3. Process is carried out in a similar way as in the Example 1 with the only difference that the prilled urea is fed from the prilling tower with the temperature of 37°C in amount of 8.8 t/h, the drum rotation speed is 30 rpm (~90 % of the critical speed), sulfur melt is fed with the temperature of 125°C, the produced urea coated with sulfur is discharged from the unit in amount of 9.6 t/h with the temperature of 42.5°C. Sulfur coating thickness is 0.02 mm, and the sulfur content in the final product is 8.2 %.

Example 4. Process is carried out in a similar way as in the Example 1 with the only difference that the prilled urea is fed from the prilling tower with the temperature of 28°C in amount of 8.9 t/h, the drum rotation speed is 32 rpm (~97 % of the critical speed), sulfur melt with the temperature of 124°C is fed in amount of 1.0 t/h, the produced urea coated with sulfur is discharged from the unit in amount of 9.9 t/h with the temperature of 36°C. Sulfur coating thickness is 0.024 mm, and the sulfur content in the final product is 9.8 %.

Example 5. Process is carried out in a similar way as in the Example 1 with the only difference that the prilled urea is fed from a storage with the temperature of 20°C in amount of 8.9 t/h, the drum speed rotation is 32.5 rpm (~99 % of the critical speed), sulfur melt with the temperature of 120°C is sent in amount of 1.6 t/h, the produced urea coated with sulfur is discharged from the unit in amount of 10.5 t/h with the temperature of 33°C. Sulfur coating thickness is 0.04 mm, and the sulfur content in the final product is 15 %.

Example 6. Process is carried out in a similar way as in the Example 1 with the only difference that the prilled urea is fed from the prilling tower with the temperature of 49°C in amount of 8.6 t/h, the drum rotation speed is 28 rpm (~84 % of the critical speed), sulfur melt is fed with a temperature of 127°C in amount of 0.6 t/h, the produced urea coated with sulfur is discharged from the unit in amount of 9.2 t/h with the temperature of 52.5°C. Sulfur coating thickness is 0.014 mm, and the sulfur content in the final product is 6.1 %.

Industrial Applicability

The invention relates to methods of production of fertilizers on the basis of urea and can be also used in the production of fertilizers containing urea and elemental sulfur.

**Claims**

1. Method of production of granulated urea coated with sulfur, including introduction of urea granules into rotating drum with simultaneous spraying of sulfur melt onto the urea granules surface in the rotating drum, **characterized in that** urea granules with a temperature of 20-60°C are fed into the drum with the blades installed on its internal surface, the drum rotation speed being 81-99 % of the critical speed of rotation, and sulfur melt spraying is carried out in the direction of the drum rotation axis.

sulfur melt → ⊔ ← heated air

bed of granules

Fig. 1

Fig. 2

A-A

Fig. 3

## INTERNATIONAL SEARCH REPORT

| International application No. |
| --- |
| PCT/RU 2011/000374 |

### A. CLASSIFICATION OF SUBJECT MATTER

C05C 9/00 (2006.01); B05D 1/02 (2006.01); B05D 7/00 (2006.01)

According to International Patent Classification (IPC) or to both national classification and IPC

### B. FIELDS SEARCHED

Minimum documentation searched (classification system followed by classification symbols)

C05C 9/00, B05D 1/02, 7/00

Documentation searched other than minimum documentation to the extent that such documents are included in the fields searched

Electronic data base consulted during the international search (name of data base and, where practicable, search terms used)

Esp@senet, RUPAT, PatSearch

### C. DOCUMENTS CONSIDERED TO BE RELEVANT

| Category* | Citation of document, with indication, where appropriate, of the relevant passages | Relevant to claim No. |
| --- | --- | --- |
| A | US 3903333 A (TENNESSEE VALLEY AUTHORITY) 02.09.1975 | 1 |
| A | SU 1093690 A (VSESOJUZNY NAUCHNO-ISSLEDOVATELSKY I PROEKTNO-KONSTRUKTORSKY INSTITUT PO KOMPLEKTNYM TEKHNOLOGICHESKIM LINIYAM) 23.05.1984 | 1 |
| A | RU 2141463 C1 (OMS INVESTMENTS, INK.) 20.11.1999 | 1 |
| A | RU 2377182 C2 (YARA INTERNEISHNL ASA) 27.12.2009 | 1 |
| A | CN 101033163 A (HANFENG SLOW RELEASE FERTILIZE) 12.09.2007 (the abstract) | 1 |

☐ Further documents are listed in the continuation of Box C.  ☐ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| 23 March 2011 (23.03.2011) | 06 October 2011 (06.10.2011) |

| Name and mailing address of the ISA/ | Authorized officer |
| --- | --- |
| RU | |
| Facsimile No. | Telephone No. |

Form PCT/ISA/210 (second sheet) (July 1998)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- SU 1093690
- US 20040163434 A
- US 3903333 A
- RU 2328338